# EUROPEAN PATENT APPLICATION

(11) **EP 4 848 681 A1**
(43) Date of publication of application: **02.12.2026**
(21) Application number: 26177060.6
(22) Date of filing: 07.05.2026
(51) Int. Cl.: H04L 41/0866, H04L 41/082, H04L 41/0853, H04L 41/0859

(54) **PROVISIONING OF DEFECT INFORMATION IN ASSOCIATION WITH PROPOSED CONFIGURATION CHANGES ON NETWORK DEVICES**

(30) Priority: 30.05.2025 US 202519224508
(71) Applicant: Arista Networks, Inc., Santa Clara, CA 95054 (US)
(72) Inventor: Ward, Timothy Charles, Santa Clara, CA 95054 (US); Madsen, Ryan Sherali, Santa Clara, CA 95054 (US); Nolan, Aran Seón Liam, Santa Clara, CA 95054 (US); McBride, Neal Edward, Santa Clara, CA 95054 (US); Hanciuta, Vlad Serban, Santa Clara, CA 95054 (US)
(74) Representative: Hoffmann Eitle

(57) **Abstract**

Methods and systems for configuration change assessment are disclosed. Embodiments of these systems and methods may receive an identification of a network device and a proposed configuration change and determine defects the network device will be subject to if the proposed configuration change is made and defects the network device is currently exposed to that will be resolved if the proposed configuration change is made.

## Description

### BACKGROUND

Communications networks comprise network devices that function to route or forward network traffic or network flows. Periodically, it may be desired to update the hardware, software, or other configuration of one or more of the network devices in a network. For example, operating system releases may occur on a fairly regular basis, and it may be desired to update network devices that execute that operating system with the latest release. In certain cases, however, these software or other configuration updates may lead to problems. The problems may occur because of issues with the software being updated, or incompatibilities between the versions of certain hardware or software on, or the configuration of, the network device.

Accordingly, it is important to be able to ascertain such problems in advance of implementing such configuration updates. Such information may allow users or other operators of networks to better determine whether such configuration updates should be undertaken, or the suitability of the configuration changes to their network. Presently there are no adequate systems for providing such configuration update data. Current systems for evaluating software issues typically lack sufficient level of detail and granularity of both network device data and defect data to provide useful configuration change data to users regarding a proposed configuration change.

What is desired then, are methods and systems for evaluation of configuration changes that can provide users with useful and actionable configuration change data regarding a proposed configuration change.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIGURE 1 is a block diagram illustrating a network topology including one embodiment of a configuration change assessment system.
FIGURE 2A is a block diagram illustrating a logical depiction of a network device database.
FIGURE 2B is a block diagram illustrating a logical depiction of a defect database.
FIGURE 3 is a flow diagram depicting one embodiment of a method for determining change assessment data for a proposed configuration change.
FIGURES 4A-4E are depictions of example interfaces that may be used by embodiments of a configuration change system.

### DETAILED DESCRIPTION

As discussed, communications networks comprise network devices (e.g., switches, routers, firewalls, hubs, modems, access points, bridges, repeaters, gateways, load balancers, etc.) that implement the network. The network devices function to route or forward network traffic or network flows (referred to herein interchangeably as packets without loss of generality) between themselves or end hosts (e.g., from packet sources to packet destinations). Each of these network devices is of a certain type and is configured in a certain manner. For example, these network devices may each comprise certain types of hardware, run particular versions of software (e.g., operating systems, applications, etc.), and have that hardware or software configured in a particular way.

Periodically, it may be desired to update the hardware, software, or other configuration of one or more of the network devices in a network. For example, operating system releases may occur on a fairly regular basis, and it may be desired to update network devices that execute that operating system with the latest release. The update of these network devices may serve to remedy problems (e.g., defects or bugs) that were present in prior versions of that software, or that presented in a particular configuration. In certain cases, however, these software or configuration updates may lead to security vulnerabilities, poor performance, disruption of service or connectivity, or other problems. The problems may occur because of issues with the software being updated, or incompatibilities between the versions of certain hardware or software on, or the configuration of, the network device.

Accordingly, important information for choosing what software to run on network devices (e.g., whether to upgrade an operating system or application on the network device) is understanding the known issues (e.g. bugs) and security vulnerabilities (e.g., Common Vulnerabilities and Exposures (CVEs)) to which the proposed software (or configuration) update is susceptible. This information requires an evaluation of configuration data for each network device that may be subject to a configuration change, including data pertaining to the proposed configuration change (e.g., a proposed software version of software that may be upgraded, a hardware configuration of that network device, features currently active on that network device, setting of that device, of other device data). Moreover, data on defects (e.g., bugs, other problems, security vulnerabilities such as CVEs, etc.) may be required, where that defect data may be associated with configuration data indicating (e.g., parameters for) configurations susceptible to those defects. By combining this network device data with the defect data, impacting issues can be identified. By identifying such issues with a proposed configuration change, users such as administrators of a network or the like may be provided with concrete data associated with a proposed configuration change, including an identification of risk associated with the proposed configuration change, and allowing these users to make informed judgments about the suitability of configuration changes to their network such as upgrading network devices to the latest (e.g., operating system) software.

Presently there are no adequate systems for providing such data in order to assist users in making such assessment in the context of a proposed configuration change to network devices. Modern networks may include hundreds, or even thousands, of network devices, where each of those network devices may be configured differently (e.g., comprise different hardware, have different version of different software executing thereon, have different features enabled or disabled, have different settings, etc.). The number of permutations of configuration on network devices in a network may be so numerous that it is difficult, if not impossible, to evaluate a proposed configuration change with respect to these network devices.

Current systems for evaluating software issues typically lack sufficient level of detail and granularity of both network device data and defect data for software to provide useful configuration change data to users regarding a proposed configuration change. In particular, current systems may provide data regarding particular aspects of a current configuration (e.g., bugs or defects related to a current configuration of network devices) but cannot provide configuration change data regarding proposed configuration changes (e.g., updates to software) and certainly not configuration change data regarding proposed configuration changes that holistically take into account the specific configurations of the various individual network devices on which such configuration changes are proposed.

Part and parcel with these defects then, current systems for defect evaluation of software cannot proactively keep users apprised of configuration change data associated with either their proposed configuration change or their current configuration (e.g., as the defect data related to the proposed upgrade dynamically changes). Additionally, these software evaluation systems cannot take account of the actual active state of the network device (e.g., the configuration of the device, including enablement of features (or disabled features) at the time the configuration change is proposed or assessed).

What is desired then, are methods and systems for evaluation of configuration changes that can provide users with configuration change data regarding a proposed configuration change, including configuration change data indicating what defects will be exposed on a network device subjected to the proposed configuration change or what defects will be ameliorated by the proposed configuration change.

To those ends, among others, embodiments as disclosed herein are directed to methods and systems for configuration change assessment. Embodiments of these systems and methods may include, or have access to, a database of defects related to one or more pieces of software, including operating system software for a network device or other application software such as agents that may be deployed on network devices. In particular, according to certain embodiments, this defect database may comprise a set of defects associated with network device configurations. For example, this set of defects may comprise defects associated with a software application, with hardware or with particular configuration settings. For purposes of this disclosure, it will be understood that a software application can be any piece of software that may execute on a network device, including operating systems, applications that execute in association with an operating system such as agents or operating system modules, low level drivers, software that executes on the operating system, such as third party software, etc.

The defect database may include the entries corresponding to the set of defects where each entry may comprise (e.g., network device) criteria associated with the presence of that defect. This network device criteria (one or more criterion), may comprise data such as hardware or software identifiers for hardware or software of a network device, features or settings and their state or operation (e.g., enabled, disabled, etc.) or any other data associated with a configuration of a network device that is a prerequisite for being affected by the defect. For example, such criteria may include an identifier identifying versions (e.g., releases) of the software where the defect (e.g., bug) may be present. An entry for a defect may also be associated with an identifier comprising network device criteria associated with the resolution of that defect (e.g., a solution identifier comprising a subset of network device criteria that may checked to see if the defect is resolved), or network device criteria associated with the introduction of that defect (e.g., an introduced identifier comprising a subset of network device criteria that may checked to see if the defect is introduced in devices associated with those criteria). In some embodiments, rather than listing every affected version of the software in the entry for a defect (e..g, which may potentially include hundreds of versions), these versions can be abstracted as a list of versions where the defect was introduced, the list of versions where the defect was fixed, and a release (a.k.a. version) graph.

Such a defect database may be, for example, linked or otherwise include data obtained from, or updated according to, a defect system maintained by providers of a software application. The provider can be network device vendors or manufacturers, or another entity involved with manufacturing, supplying or configuring such a network device, including entities that develop the operating system for network devices. In one embodiment, defect information may be provided from a defect system to update the defect database at the configuration change assessment system in response to a request from a configuration change assessment system. Defect information may also be provided to the configuration change assessment system to update the defect database on a regular schedule. Defect information may also be provided to the configuration change assessment system when new defect information becomes available in the defect system. Some combination of these mechanisms, or other mechanisms may also be utilized to provide defect information to a configuration change assessment system.

Embodiments may also include, or have access to, a network device database including network device entries corresponding to the network devices in the network. A network device entry may include network device information (data) including, for example, network device identification information, configuration information, state information or operational information. In some embodiments, a network device entry associated with the network device may be created and updated based on the state of the network device, including as the device is operating or configured in the network. Specifically, data associated with a state (e.g., including a configuration) of the network device as included in a system database at the network device may be received from the network device at the configuration assessment system (or obtained from the network device) and used to update the network device entry for that network device in the network device database. This network device data may be sent, for example, by the network device when the network device first initialize (e.g., reboots, restarts, reinitializes, etc.) or when a configuration change occurs on the network device such that the system database on the network device is altered, triggering the sending of network device data on the network device to the configuration assessment system.

Accordingly, embodiments of a configuration change assessment system may provide an interface through which an identification of a network device (or network device information associated with a network device) may be provided along with a proposed configuration change to that network device (also referred to herein as a proposed upgrade without loss of generality). This proposed configuration change may comprise an identification of a potential change in any aspect of the configuration of network device, such as hardware or software identifiers for hardware or software to be altered at a network device, features or settings and their state or operation (e.g., enabled, disabled, etc.) to be altered at the network device, or any other data associated with a configuration of a network device that may be altered. For example, the proposed configuration change may include an identifier associated with one or more pieces of software to be installed or upgraded at the network device or a proposed change to a setting or feature of the network device (e.g., a protocol setting). Based on the identification of the network device, a corresponding network device entry in the network device database can be determined and the network device data included in that corresponding entry accessed.

For example, embodiments of such a configuration change assessment system can be incorporated into a centralized network management system that offers management interfaces for managing aspects of a network. This centralized network management system can, for example, be deployed on a distributed computing platform such as a cloud based platform or the like, and offer management interfaces through which a user may access, provide, request, or otherwise access data on a network, including network devices within that network. Such interfaces may provide the ability for a user to identify one or more network devices, such as by providing an identifier of one or more network devices, selecting the network device from amongst a presented set of network devices (e.g., such as from a graphically presented network topology or list of network devices), or to otherwise specify a network device using information that may be associated with entries in the network device database.

It will be noted that almost any identifying information may be provided that may allow the identification of network devices, classes of network devices, types of network devices, network devices with certain configurations or settings, etc. Such identifying data may include names or addresses assigned to a network device, hardware or software that may be present on one or more network devices, versions of hardware or software that may be present on one or more network devices, features enabled or disabled on network devices, settings on one or more network devices, some combination of identifying data or other identifying data as may be contemplated.

These interfaces may also allow a user to select or provide a proposed configuration change. For example, these interfaces may provide a set of current network device information associated with a network device (e.g., as obtained from the network device database) and allow a user to select identifiers of one or more pieces of software, features, or settings or other device configuration data for a proposed configuration change, along with allowing a user to provide data on that proposed configuration change. This data may include, for instance, an identifier of a version of software to which it is desired to upgrade, an identifier of a feature it is desired to enable or disable, a value for a setting it is desired to change, or any other potential change in any aspect of the configuration of the network device.

This network device data (e.g., as obtained from the network device entry) may then be used to determine which of the defects included in the defect database the network device will be subject to if the proposed configuration change is made and what defects the network device is currently exposed to will be resolved if the proposed configuration change is made. Specifically, according to embodiments, the current network device information as obtained from network device entry associated with the identified network device may be compared with the network device criteria associated with entries in the defect database to determine defects that may apply to a current configuration of the network device (e.g., as obtained from the network device entry at the configuration change assessment system).

Moreover, the current network device information (e.g., as obtained from the network device entry at the configuration change assessment system) may be altered to create proposed configuration change network device information that reflects the proposed configuration change. In one embodiment, for example, the current network device information associated with the proposed configuration change may be identified (e.g., the version of the software of hardware or other configuration data associated with the proposed configuration change) and the proposed configuration change substituted in place of that current network device information in the current network device information to create the proposed configuration change network device information. For example, if the proposed configuration change identifies a version of an operating system or agent for the network device, the identified version of the operating system or agent for the proposed configuration change may be substituted in place of the current version of the operating system included in the current network device information to create the proposed configuration change network device information.

This proposed configuration change network device information (e.g., including the proposed configuration change) may be compared with the network device criteria associated with entries in the defect database to determine defects that may apply to the proposed configuration change of the network device. For any defect entries in the defect database that match the proposed configuration change network device information, the defect identifier of that defect entry may be added to a list of applicable defects associated with the proposed configuration change for the identified network device.

A set of defects introduced by the proposed configuration change of the network device can also be determined (e.g., in embodiments where introduced identifiers are not included in a defect database). This introduced set of defects may be a subset of the determined applicable defects for the proposed configuration change. **In** particular, the set of introduced defects for the proposed configuration change may be determined as the difference between the list of defects determined to apply to the current configuration of the network device and the list of defects determined to apply to the proposed configuration change for the network device. Any defects appearing on the list of defects associated with the proposed configuration that do not appear on the list of applicable defects associated with the current configuration of the network device can be deemed as defects that will be introduced by the proposed configuration change.

In one embodiment (e.g., an embodiment where solution identifiers are not included in a defect database), defects that will be resolved by the proposed configuration change to the network device may be determined by determining a difference between the defects determined to be applicable to the current configuration of the identified network device and the list of applicable defects associated with the proposed configuration change for the identified network device. Any defects appearing on the list of defects associated with the current configuration that do not appear on the list of application defects associated with the proposed configuration change can be deemed as defects that will be resolved by the proposed configuration change.

In embodiments where solution identifiers or introduced identifiers may be utilized, these solution identifiers or introduced identifiers can be used to determine defects that will be introduced or resolved by the proposed configuration change to the network device. Specifically, in one embodiment, the proposed configuration change network device information (e.g., including the proposed configuration change) may be compared to the introduced identifiers or solution identifiers (e.g., in the network defect database, such as solution identifiers or introduced identifiers associated with the list of applicable defects determined for the current device configuration or the proposed configuration change) In particular, in one embodiment, solution identifiers (e.g., associated with applicable defects for the current configuration of the network device) may be compared to the (set of network device criteria for the) proposed configuration change to see if any solution identifier includes, encompasses, identifies, or otherwise matches the proposed configuration change. If a solution identifier matches the proposed configuration the defect associated with the solution identifier may be added to a list of resolved defects associated with the proposed configuration change. Similarly, introduced identifiers (e.g., associated with applicable defects for the proposed configuration of the network device) may be compared to the (set of network device criteria for the) proposed configuration change to see if any introduced identifier includes, encompasses, identifies, or otherwise matches the proposed configuration change. If an introduced identifier matches the proposed configuration the defect associated with the introduced identifier may be added to a list of introduced defects associated with the proposed configuration change.

This list of applicable defects associated with the proposed configuration change for the identified network device (or devices) may then be presented to a user. The list of applicable defects may (or may not) be presented in association with the list of resolved defects associated with the proposed configuration change for the identified network device. Moreover, the list of applicable defects may include a subset of defects introduced by the proposed configuration change. For example, as discussed, embodiments of a configuration change assessment system can be included in a centralized network management system that offers management interfaces for managing aspects of a network, including interfaces through which users may identify a network device and a proposed configuration change. The list of applicable defects or resolved defects may be returned to the user through such an interface (e.g., in response to a user identifying the network device and proposed configuration change).

As can be seen then, embodiments may solve the difficult problem of identifying defects that may be introduced, or resolved, by configuration changes in complex network processes. In particular, embodiments may provide solutions to such issues by automating collection of data on network devices from across a network, and correlating that obtained network device data against a database of defects in the context of a proposed configuration change. This ability allows for the efficient generation of data related to the assessment of the suitability of proposed configuration changes for devices in a network. Thus, for example, embodiments may be adapted to provide a curated list of defects for network devices along with attributes describing when those defects are applicable. These attributes may include: software type, software version, hardware identifiers, and features active (or inactive) on a network device. Moreover, embodiments may provide a mechanism to determine these attributes for each (or a subset of) the network devices on a network. Additionally, embodiments may be able to tailor these assessments based on user input regarding proposed configuration changes and the device identifying information that may be used to scope the network device or devices on which such a configuration change assessment is to be performed.

Accordingly, embodiments may be adapted to determine data (e.g., generate reports) to assist operators of a network in assessing the suitability of configuration updates (e.g., software updates) prior to deploying those configuration changes to a device or network of devices. Such data or reports may identify the defects in the proposed configuration changes or a difference of defects relative to, for example, a current configuration.

Thus, embodiments may provide a forward looking view of what defects a proposed configuration change may introduce or remove from a network. With this data users can evaluate a complete set of defects that may result from a proposed configuration change, as well as deltas (fixes, and new defects) from the current configuration to the proposed configuration. This allows operators to quickly evaluate proposed configuration changes without actual deployment of such changes.

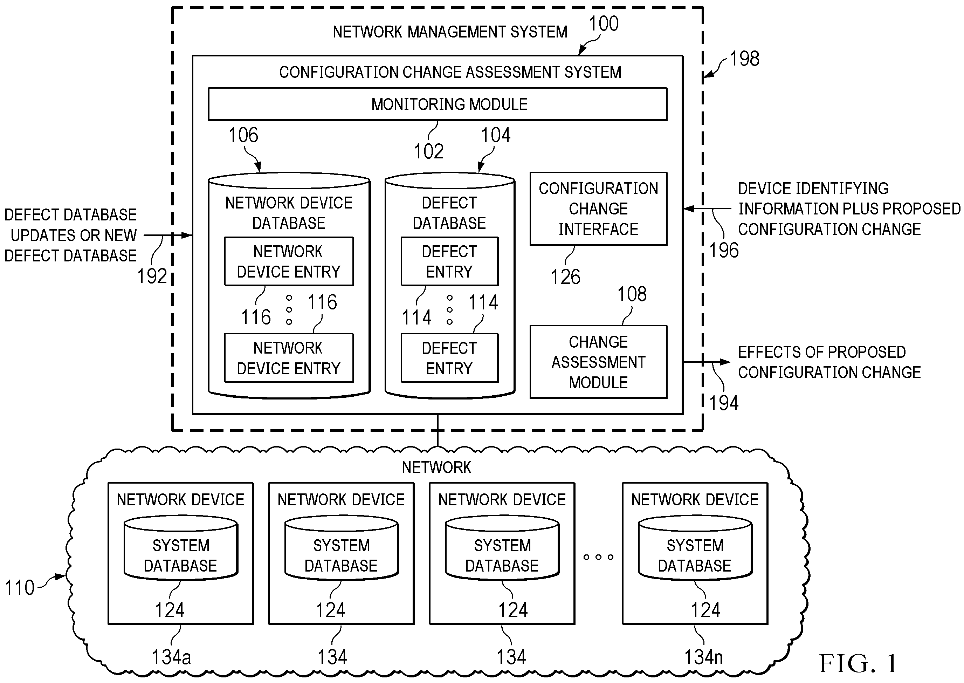

Referring now to FIGURE 1, a network topology including one embodiment of a configuration change assessment system 100 (or just change assessment system) is depicted. Change assessment system 100 may be connected to a network 110 that includes one or more network devices 134a-134n, where other devices (not shown) may be connected to the network devices 134a-134n. Network devices 134a-134n may be network infrastructure devices adapted to implement the functionality of network 110 by routing, forwarding or otherwise processing network traffic (referred to herein without loss of generality as packets). Such network devices 134a-134n can include switches, routers, firewalls, hubs, modems, access points, bridges, repeaters, gateways, load balancers, etc.

Change assessment system 100 may be incorporated, in one embodiment, in a central network management system 198 such as cloud based central network management system or the like, adapted to manage network 100. Change assessment system 100 may include configuration change interface 126, monitoring module 102, defect database 104, network device database 106 and change assessment module 108. Network device database 106 may store network device information including one or more network device entries 116 associated with network devices 134a-134n. Defect database 104 may include defect entries 114 corresponding to defects in one or more this set of defects may comprise defects associated with a software application (e.g., operating systems, agents, etc.)., with hardware or with particular configuration settings on a network device. It will be noted here that the term database as used herein does not imply any particular storage medium, data structure or data format. Different and various suitable storage mediums, data structures or data formats will be understood and are fully contemplated herein.

Monitoring module 102 includes functionality to receive network device information from the network devices 134a-134n and create or update network device entries 116 in network device database 106. Specifically, in certain embodiments, network devices 134a-134n may include functionality to obtain and store device information the network device storage. In one embodiment, network devices 134a-134n are connected to change assessment system 100 and are adapted to send or otherwise provide network device information to monitoring module 102 of change assessment system 100. This network device data may be used to create or update network device entries 116.

Network device entry 116 may include network device information (data) including, for example, network device identification information, configuration information, state information or operational information. In some embodiments, a network device entry associated with the network device may be created and updated based on the state of the network device, including as the device is operating or configured in the network. Specifically, data associated with a state (e.g., a configuration) of the network device as included in a system database at the network device may be received from the network device at the configuration assessment system (or obtained from the network device) and used to update the network device entry for that network device in the network device database.

To illustrate in more detail, each network device 134a-134n may maintain a system state database 124 that includes network device information. This system state database 124 may include the current state of the network device 134a-134n. More specifically, in certain cases system state database 124 may include all, or a subset of, values in data structures used by network device agents that implement protocols or services of the network device 134a-134n. Examples of network device agents include a command line interface agent, a routing information base agent, a forwarding information base agent, a simple network management protocol (SNMP) agent, etc. For example, the system database 124 may include the current routes table entries as determined by the routing information base agent.

System state database 124 can, for example, store such data in records within the system state database 124, where each record includes at least the name of a variable (or name of the parameter), the current value of the variable (or parameter), and a timestamp indicating when the record was created (or last modified). This system state database 124 may be written to create new or updated values in the system state database 124 to update the state of the corresponding network device 134a-134n. Examples of the types of information that may be stored in the system state database include, but are not limited to, information related to the configuration of network interfaces, VLANs used by the network device, IP addresses used by the network device, DNS information, NTP information, information about the routing policy( or policies) implemented on the network device, information about any QoS scheme implemented on the network device, the contents of the current MAC address table, VXLAN table, the contents of the ARP table, the contents of the routing table, information about readings obtained from various sensors, e.g., temperature sensors, voltage sensors, and power sensors. Other information may be imagined, as is fully contemplated herein.

Network device 134a-134n may be adapted (e.g., an agent on the network device 134a-134n) to obtain network device data from system state database 124 (e.g., reflecting the current or past state of the network device 134a-134n) and provide this obtained network device data to monitoring module 104 at the change assessment system 100. This network device data may be used to create or update network device entries 116. This network device data may be obtained from system state database 124 and sent to monitoring module 104 when there is a change in state of the network device (e.g., when there is a change of any value in any portion of the system state database 124), at regular intervals, or according to some other schedule. In this manner, the network device entries 116 at change assessment system 100 may reflect a current state of network device 134a-134n on network 100 substantially in real time as those network devices 134a-134n dynamically change during operation.

Monitoring module 104 may also be adapted to receive defect information 192 (e.g., from a defect database or provider of software associated with those defects). In particular, such a defect system may provide defect information 192 corresponding to software (or hardware) which is available for use with network devices, or may become available for use in the (e.g., near) future. This defect information 192 may be used to create or update defect entries 114 in defect database 104. Such a defect information 192 may be, received or obtained from, a defect system maintained by providers of the software application, such as a network device vendor or manufacturer or other entity involved with manufacturing, supplying or configuring such a network device, including entities that develop the operating system for network devices.

In one embodiment, defect information 192 may be provided from a defect system in response to a request from monitoring module 102, may be provided from a defect system to monitoring module 102 on a regular schedule, or may be provided to the monitoring module 102 by a defect system when new defect information becomes available in the defect system, or some combination thereof. Other techniques for receiving defect information or otherwise creating or updating defect entries 114 in defect database 104 may be utilized and are fully contemplated herein.

Thus, defect database 104 may include defect entries 114 corresponding to the set of defects where each entry 114 may comprise (e.g., network device) criteria associated with the presence of that defect. This network device criteria (one or more criterion), may comprise data such as hardware or software identifiers for hardware or software of a network device, features or settings and their state or operation (e.g., enabled, disabled, etc.) or any other data associated with a configuration of a network device that are a prerequisite for being affected by the defect. For example, such criteria may comprise a (presence) identifier identifying versions (e.g., releases) of software where the defect (e.g., bug) may be present. An entry 114 for a defect may also, in one embodiment, include a (solution) identifier associated with network device criteria associated with resolution of the defect or an (introduced) identifier associated with network device criteria associated with introduction of the defect. An entry 114 for a defect in the defect database may also include network device criteria comprising data such as hardware or software identifiers for hardware or software of a network device, features or settings and their state or operation (e.g., enabled, disabled, etc.) that are a prerequisite for being affected by the defect.

An entry 114 for a defect may also be associated with a (solution) identifier comprising network device criteria associated with the resolution of that defect (e.g., a solution identifier comprising a subset of network device criteria that may checked to see if the defect is resolved), or network device criteria associated with the introduction of that defect where the defect bug may have been introduced (e.g., an introduced identifier comprising a subset of network device criteria that may checked to see if the defect is introduced in devices associated with those criteria). Embodiments as disclosed may thus include data as discussed in accordance with U.S. Patent 10,187,286 to Sigoure issued on January 22, 2019, and U.S. Patent No. 10,484,256 to Gourlay et al and issued on November 19, 2019, both of which are incorporated herein by reference in their entirety for all purposes.

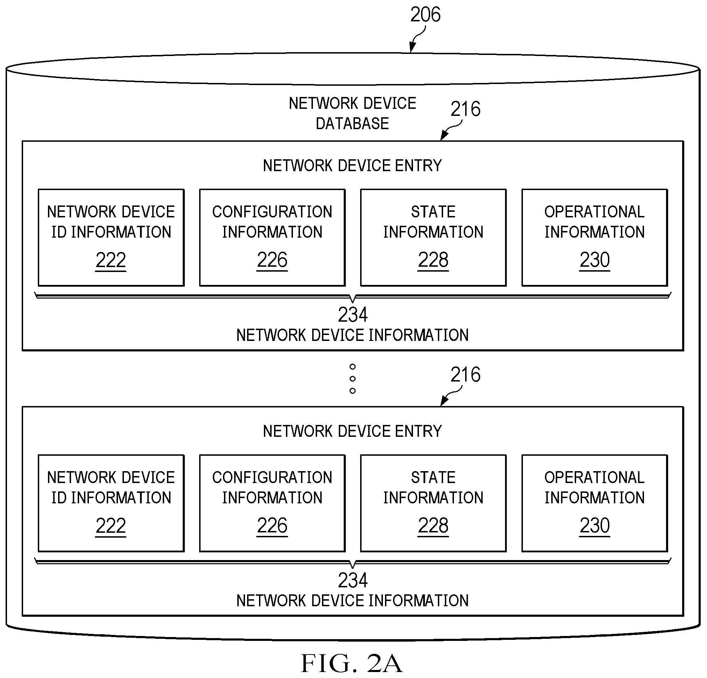

Before further describing embodiments it may be useful here to go over embodiments of a network device database and a defect database. Looking then at FIGURE 2A, a network device database in accordance with one or more embodiments is depicted. In one embodiment, network device database 206 includes network device entries 216. A network device entry 216 may include network device identification (ID) information 222, configuration information 226, state information 228, and operational information 230. The information in network device entry 216 thus comprises network device information 234.

In one embodiment, network device ID information 222 includes information that uniquely identifies an associated network device in a network. The network device ID information 222 may include product name, model number, serial number, any other information that uniquely identifies the associated network device, or any combination thereof. Configuration information 226 may include hardware version information or software version information for the associated network device. State information 228 includes, for example, enabled routing algorithm, a number of routing table entries maintained by the associated network device, a number of Internet Gateway Protocol (IGP) peers of the associated network device, a number of configured virtual local area networks (VLAN) on the associated network device, security settings information, a number of MAC addresses in a MAC table of the associated network device, or information about capabilities enabled on the network device. Operational information 230 may include information on the number of times commands have been executed on the associated network device, information about processes that have run or are running on the associated network device, information about the amount of time the associated network device has been up (e.g., powered on, configured, and performing network related activities), information related to the operating temperature of the associated network device, information about the quantity and distribution among ports of packets sent to and from the associated network device, or information about the number of packets dropped by the associated network device. As will be understood, a lesser or greater amount of data may be included in such network device entries 216 without departing from the scope of embodiments as disclosed.

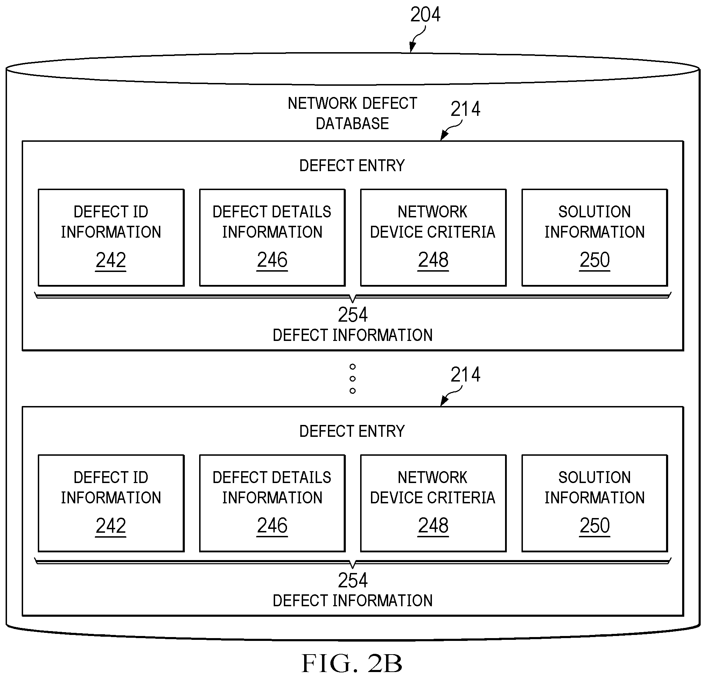

Moving on to FIGURE 2B, a network defect database in accordance with one or more embodiments is depicted. In one embodiment, the network defect database 204 includes defect entries 214 corresponding to defects in a corresponding piece of software (or hardware). The information in defect entry 214 thus comprises defect information 254. A defect may be, for example, any issue with software (or hardware) that hinders or prevents that software (or hardware) from performing as desired. A defect entry 214 for an associated defect may include defect identification (ID) information 242, defect details information 246, network device criteria 248, and solution information 250.

Defect ID information 242 includes information that uniquely identifies the associated defect. For example, a manufacturer of a network device or provider of software of a network device (e.g., an operating system provider) may use a defect tracking system that assigns an identifying character string to the defect when it is entered into the system. Defect details information 246 includes a description of the symptoms seen by network devices affected by the defect, the date the defect was reported, screenshots that depict the defect, hyperlinks to pertinent documents or information related to the defect, or a sequence of events that might lead to the defect.

Network device criteria 248 may include network device product names, network device model numbers, software versions or hardware versions defining characteristics or attributes of network device to which the associated defect may apply. For example, network device criteria may include a (presence) identifier identifying versions (e.g., releases) of software where the associated defect may present. Network device criteria 248 may also include information pertaining to the state or operation of the network device that may be associated with network devices affected by the associated defect, such as features that are enabled (or disabled) or settings on a network device.

Solution information 250 includes procedures that can be implemented to resolve or avoid the defect, information about hardware or software that includes a solution to the defect (e.g., a version of the software where the defect may have been resolved), information about how to obtain such hardware or software, steps that can be taken to deploy the hardware or software, or changes that can be made to existing software or hardware to resolve the associated defect. As will be understood, a lesser or greater amount of data may be included in such defect entries 214 without departing from the scope of embodiments as disclosed.

Now returning to the embodiment of FIGURE 1 with a better understanding of particular embodiments of a network device database and a defect database 104; change assessment module 108 may be adapted to utilize defect entries 114 of defect database 104 and network device entries 116 of network device database 106 to perform an assessment of a (e.g., proposed) configuration change to one or more network devices 134a-134n in network 110. As the defect database 104 may be kept substantially current with respect to available software or hardware, such a configuration change assessment may be performed with respect to newly available software or hardware, or versions of software (e.g., operating systems, agents, or the like) or hardware that may be available, but not yet installed on, network devices 134a-134n (e.g., new or upcoming releases of such software or hardware). Moreover, as network device database 106 may be kept substantially updated with a current state of network devices 134a-134n the configuration change assessment may be performed in the context of the current operational configuration or state of that network device 134a-134n.

Embodiments of change assessment module 108 may thus provide an interface 126 through which an identification of a network device 134a-134n (e.g., network device information associated with a network device) may be provided along with a proposed configuration change (also referred to herein as a proposed upgrade without loss of generality) 196. This proposed configuration change may comprise an identification of a potential change in any aspect of the configuration of network device, such as hardware or software identifiers for hardware or software to be altered at a network device, features or settings and their state or operation (e.g., enabled, disabled, etc.) to be altered at the network device, or any other data associated with a configuration of a network device that may be altered.

It will be noted that almost any identifying information may be provided that may allow the identification of network devices, classes of network devices, types of network devices, network devices with certain configurations or settings, etc. Such identifying data may include names or addresses assigned to a network device, hardware or software that may be present on one or more network devices, versions of hardware or software that may be present on one or more network devices, features enabled or disabled on network devices, settings on one or more network devices, some combination of identifying data or other identifying data as may be contemplated.

For example, centralized network management system 198 may offer management interfaces for managing aspects of a network through which a user may access, provide, request, or otherwise access data on network 110, including network devices 134a-134n within that network 110. Such interfaces may include a configuration change assessment interface 126 that provides the ability for a user to identify one or more network devices 134a-134n, such as by providing an identifier of one or more network devices, selecting the network device 134a-134n from amongst a presented set of network devices (e.g., such as from a graphically presented network topology or list of network devices), or to otherwise specify a network device 134a-134n using information that may be associated with entries in the network device database.

Configuration change interface 126 may also allow the user to specify the proposed configuration change associated with the specified network device 134a-134n. This proposed configuration change may comprise an identifier associated with one or more pieces of software to be installed or upgraded at the network device or a proposed change to a setting or feature of the network device. For example, these interfaces may provide a set of current network device information associated with a network device (e.g., as obtained from the network device database) and allow a user to select identifiers of one or more pieces of software, features, or settings for a proposed configuration change, along with allowing a user to provide data on that proposed configuration change. This data may include, for instance, an identifier of a version of software to which it is desired to upgrade, an identifier of a feature it is desired to enable or disable, a value for a setting it is desired to change, other proposed upgrade data.

Based on the identification of the network device 134a-134n, a corresponding network device entry 116 in the network device database 106 can be determined and the network device data included in that corresponding entry 116 accessed. This network device data (e.g., as obtained from the network device entry 116) may then be used to determine which of the defects associated with defect entries 114 included in the defect database 104 the identified network device 134a-134n will be subject to if the proposed configuration change is made, and what defects the network device 134a-134n is currently exposed to that will be resolved if the proposed configuration change is made.

Specifically, according to embodiments, the current network device information as obtained from network device entry 116 associated with the identified network device may be compared with the network device criteria associated with entries 114 in the defect database 104 to determine defects that may apply to a current configuration of the identified network device (e.g., as obtained from the associated network device entry 116 at the configuration change assessment system 100).

Moreover, the current network device information (e.g., as obtained from the network device entry 116) may be altered to create proposed configuration change network device information that reflects the proposed configuration change. In one embodiment, for example, the current network device information in the network device entry 116 associated with the proposed configuration change may be identified. For example, a current version of the software associated with the proposed configuration change may be determined from the network device entry 116. The proposed configuration change can then be substituted in place of corresponding information in the current network device information to create the proposed configuration change network device information. For example, if the proposed configuration change identifies a version of an operating system for the network device, the identified version of the operating system for the proposed configuration change may be substituted in place of the current version of the operating system included in the current network device information included in associated network device entry 116 to create the proposed configuration change network device information.

This proposed configuration change network device information (e.g., including the proposed configuration change) may be compared with the network device criteria associated with defect entries 114 in the defect database 104 to determine defects that may apply to the proposed configuration change for the identified network device. For any defect entries 114 in the defects database 104 that match the proposed configuration change network device information, the defect identifier of that defect entry 114 may be added to a list of applicable defects associated with the proposed configuration change for the identified network device.

In one embodiment, (e.g., in cases where solution identifiers may not be included in defect entries 114), the list of applicable defects 194 associated with the proposed configuration change for the identified network device may be used to determine defects that will be resolved by the proposed configuration change to the identified network device. Specifically, any defects present in the list of defects determined to apply to a current configuration of the identified network device that are not present in the list of defects determined to apply to the proposed configuration change for the identified network device may be determined to be defects that will be resolved by the proposed configuration change to the identified network device.

A set of defects introduced by the proposed configuration change of the network device can also be determined. This introduced set of defects may be a subset of the determined applicable defects 194 for the proposed configuration change. **In** particular, the set of introduced defects for the proposed configuration change may be determined as the difference between the list of defects determined to apply to the current configuration of the network device and the list of defects determined to apply to the proposed configuration change for the network device. Any defects appearing on the list of defects associated with the proposed configuration that do not appear on the list of applicable defects associated with the current configuration of the network device can be deemed as defects that will be introduced by the proposed configuration change.

As another embodiment, a solution identifier or introduced identifier associated with determined defect entries 114 may be used to determine if those defects will be resolved or introduced by the proposed configuration change to the identified network device. In particular, in one embodiment, the solution or introduced identifier of defect entries 114 associated with the current network configuration or proposed configuration change may be compared to the proposed configuration change to see if the solution identifier or introduced identifier of a defect entry 114 (e.g., one or more network device criteria identifying versions of a software application, such as an operating system or agent, a feature or setting change, or other configuration data that may be associated with the resolution or introduction of a defect) includes, encompasses, identifies, or otherwise matches the proposed configuration change (e.g., network device criteria such as an identification of a version of a software, such as an operating system or agent, that it is desired to use, an identification of a proposed change to a feature or setting, etc.). If the solution identifier for a defect entry 114 matches the proposed configuration change, the defect identifier of that defect entry 114 may be added to a list of resolved defects associated with the proposed configuration change for the identified network device while if an introduced identifier for a defect entry 114 matches the proposed configuration change, the defect identifier of that defect entry 114 may be added to a list of introduced defects associated with the proposed configuration change for the identified network device..

This determined list of applicable defects 194 associated with the proposed configuration change for the identified network device (or devices) may then be presented to a user (e.g., using configuration change interface 126). The list of applicable defects may (or may not be) presented in association with the list of resolved defects associated with the proposed configuration change for the identified network device. For example, as discussed, embodiments of configuration change assessment system 100 can be included in centralized network management system 198 that offers management interfaces for managing aspects of a network, including interfaces through which users may identify a network device and a proposed configuration change. The list of applicable defects or resolved defects may be returned to the user through such an interface (e.g., in response to a user identifying the network device and proposed configuration change).

It will be noted here that while embodiments have been described with respect to determining a configuration change assessment based on a user specification of one or more network devices and a proposed configuration change assessment, such configuration change assessments may also be performed or initiated in other manners. For example, in one embodiment, configuration change assessment may be performed on one or more network devices 134a-134n based on an update of defect database 104. In these types of embodiment, when new defect entries 114 are created in defect database (e.g., for a new version of software such as an operating system or the like) or existing defect entries 114 are updated in the defect database 104, these created or updated entries 114 may drive one or more configuration change assessments for one or more network device 134a-134n.

For instance, in one embodiment, when an entry 114 is created or updated in defect database 104 the network device criteria associated with those entries 114 may be used to identify network device 134a-134n in network 110 to which the defect associated with that entry may apply (e.g., using network device entries 116 in network device database 106). Configuration change assessments can then be performed for these identified network devices based on the created or updated defect entries 114. The list of any applicable defects or resolved defects determined from those configuration change assessments for those network devices can then be stored in association with those network devices and, for example, presented to a user when the user next accesses the network management system 198 (or at another point as the user is managing network 110).

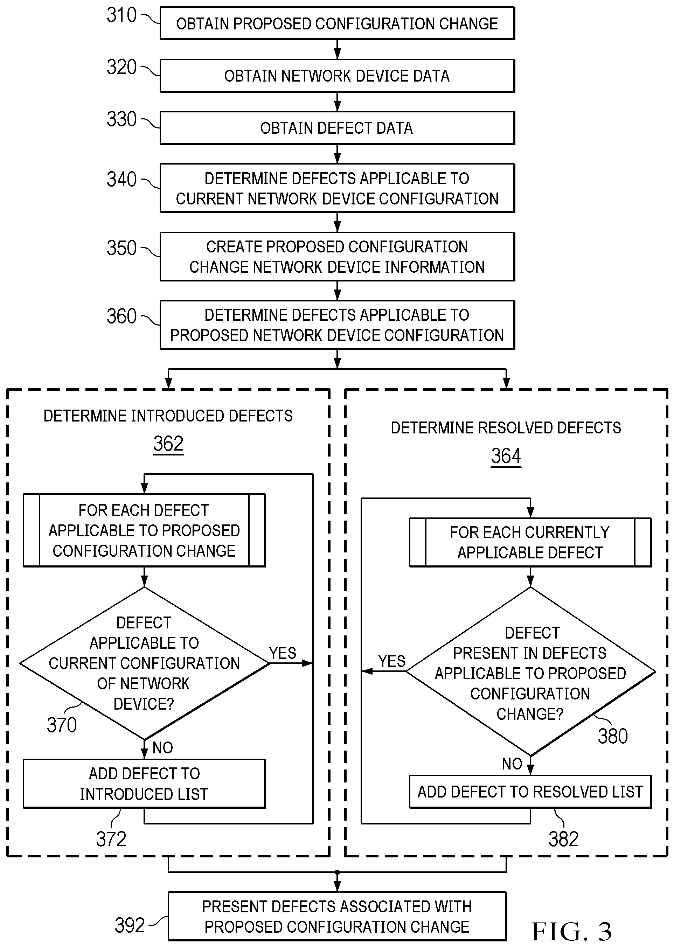

Moving to FIGURE 3, a flow diagram for one embodiment of a method for performing a configuration change assessment is depicted. Such a method can be performed, for example, by a configuration change assessment system. Initially, a proposed configuration change may be obtained (STEP 310). This proposed configuration change may include an identification of a network device on a network (e.g., network device information associated with a network device) and a proposed configuration change. This proposed configuration change may comprise an identification of a potential change in any aspect of the configuration of network device, such as hardware or software identifiers for hardware or software to be altered at a network device, features or settings and their state or operation (e.g., enabled, disabled, etc.) to be altered at the network device, or any other data associated with a configuration of a network device that may be altered. For example, a configuration change can identify a version of software that it is desired to install on the network device to upgrade or otherwise alter, such as a version of an operating system for the network device or the like. Thus, a proposed configuration change may comprise an alteration to the configuration of a network device that has not yet occurred (e.g., the network device is not configured in that manner; for example, the identified network device is not running the identified version of software).

Network device data associated with the identified network device can then be obtained (STEP 320). This network device data may include a set of current configuration data associated with the identified network device. This configuration data can, for example, be obtained from the network device and reflect the operational configuration of the network device. Defect data on defects associated with any aspects of the proposed configuration change may also be obtained (STEP 330). These defects may, for example, be associated with the software it is desired to alter on the network device as specified in the proposed configuration change (e.g., by upgrading to a newer version of the software).

Defects to which the identified network device will be subject to if the proposed configuration change is made can then be identified. To determine these defects, the current network device information associated with the identified network device (e.g., reflecting the current configuration of the network device) may be compared with network device criteria associated with the defects to determine defects that may apply to the current configuration of the identified network device (STEP 340).

Once currently applicable defects are determined, a set of defects applicable to the proposed configuration change may also be determined. Here, the current network device information may be altered to create proposed configuration change network device information that reflects the proposed configuration change (STEP 350). **In** one embodiment, for example, the portion of the current network device information associated with the proposed configuration change may be identified (e.g., a current version of an operating system). The proposed configuration change can then be substituted in place of corresponding information in the current network device information to create the proposed configuration change network device information (e.g., by replacing the current version of the operating system with the version of the operating system identified in the proposed configuration change).

This proposed configuration change network device information (e.g., including the proposed configuration change) may be compared with the network device criteria associated with each defect of the defect data to determine defects that may apply to the proposed configuration change for the identified network device (STEP 360). For any defects that match the proposed configuration change network device information, that defect may be added to a list of applicable defects associated with the proposed configuration change for the identified network device.

Based on the set of defects applicable to the current configuration and the set of defects applicable to the proposed configuration change, a set of introduced defects or a set of resolved defects associated with the proposed configuration change can be determined (STEPS 362, 364). An introduced set of defects may be a subset of the applicable defects determined for the proposed configuration change. In particular, the set of introduced defects for the proposed configuration change may be determined as the difference between the list of defects determined to apply to the current configuration of the network device and the list of defects determined to apply to the proposed configuration change for the network device.

Thus, for each of the defects applicable to the proposed configuration change, if that defect does not appear on the list of applicable defects associated with the current configuration of the network device (N Branch os STEP 370) that defect can be deemed a defect that will be introduced by the proposed configuration change and added to a list of introduced defects (STEP 372). Similarly, for each of the defects applicable to the current configuration of that network device, if that defect does not appear on the list of applicable defects associated with the proposed configuration change for the network device (N Branch os STEP 380) that defect can be deemed a defect that will be introduced by the proposed configuration change and added to a list of resolved defects (STEP 382).

This determined list of applicable defects associated with the proposed configuration change for the identified network device may then be presented to a user (STEP 392). The list of applicable defects may (or may not be) presented in association with the list of resolved defects associated with the proposed configuration change for the identified network device or with the set of introduced defects determined for the proposed configuration.

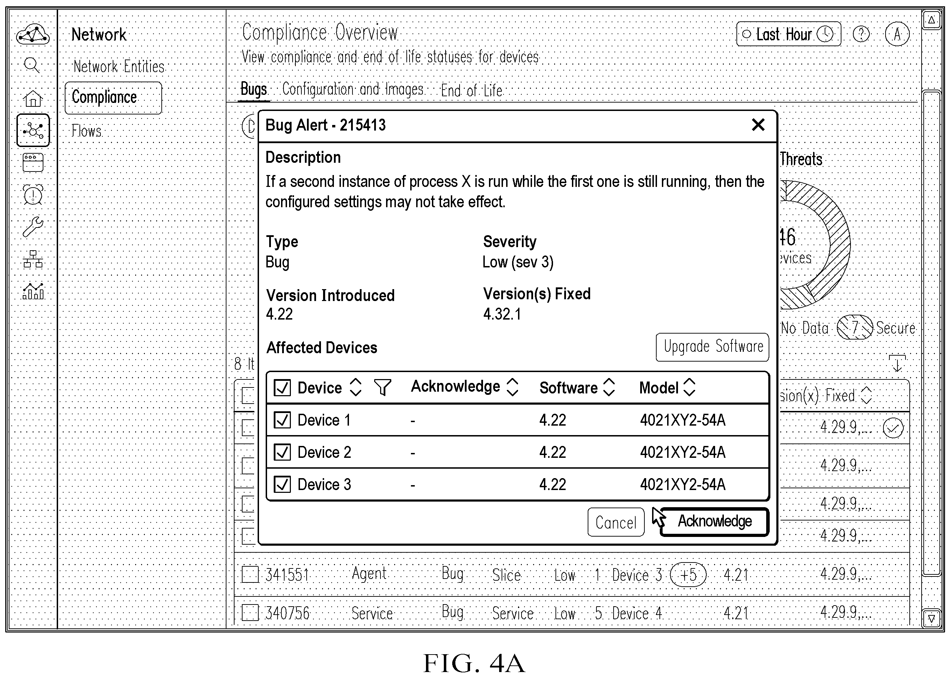

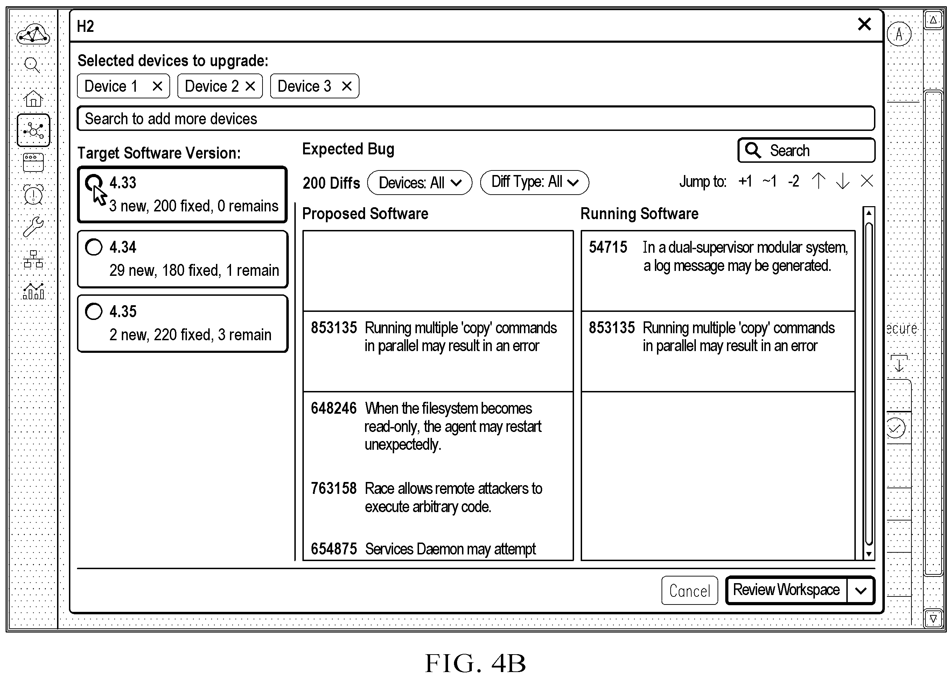

FIGURES 4A-4D depicts examples of interfaces that may be utilized by embodiments of a configuration change system. Specifically, FIGURE 4A depicts an embodiment of an interface that may be utilized to identify one or more network devices that it may be desired to upgrade. Here, such an interface may be presented when a user accesses data on a particular bug associated with a particular piece of software that identifies network devices subject to that bug to a user. The user may select such identified network devices (e.g., here identified by the identifiers "Device 1," "Device 2," and "Device 3") as being desirable to upgrade. When such devices are selected for a potential upgrade the user may be presented with an interface such as that depicted in FIGURE 4B that allows a user to select a version of that software available (e.g., here "4.33", "4.34" or "4.35" where "4.33" has been selected) for use in upgrading those identified devices. The user can then be presented with the bugs that may manifest on those identified devices under the "proposed software" along with the bugs on the currently "running software" (which may be resolved by upgrading to the "proposed software."

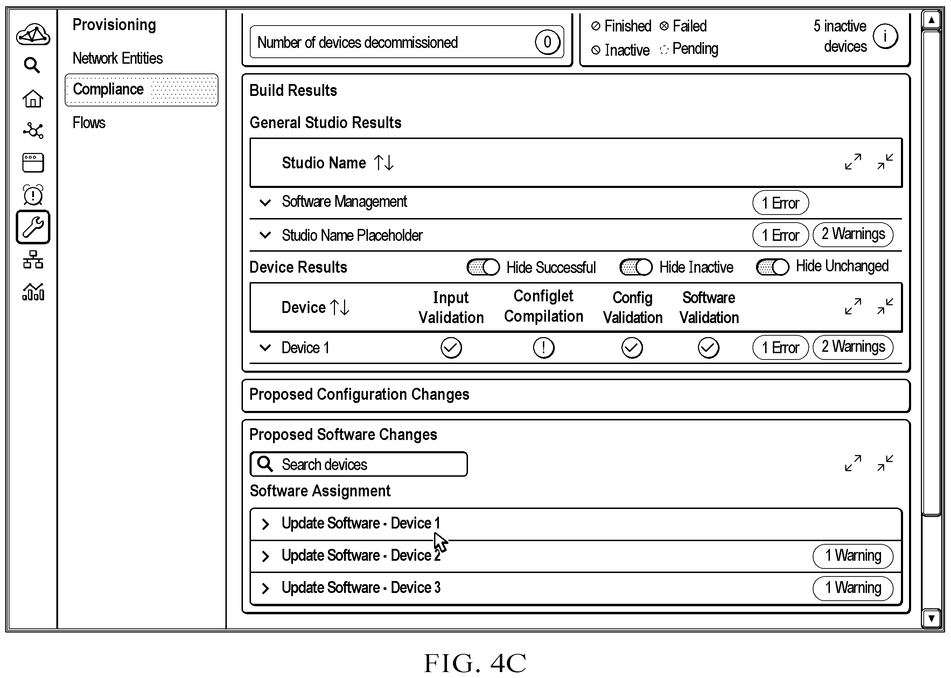

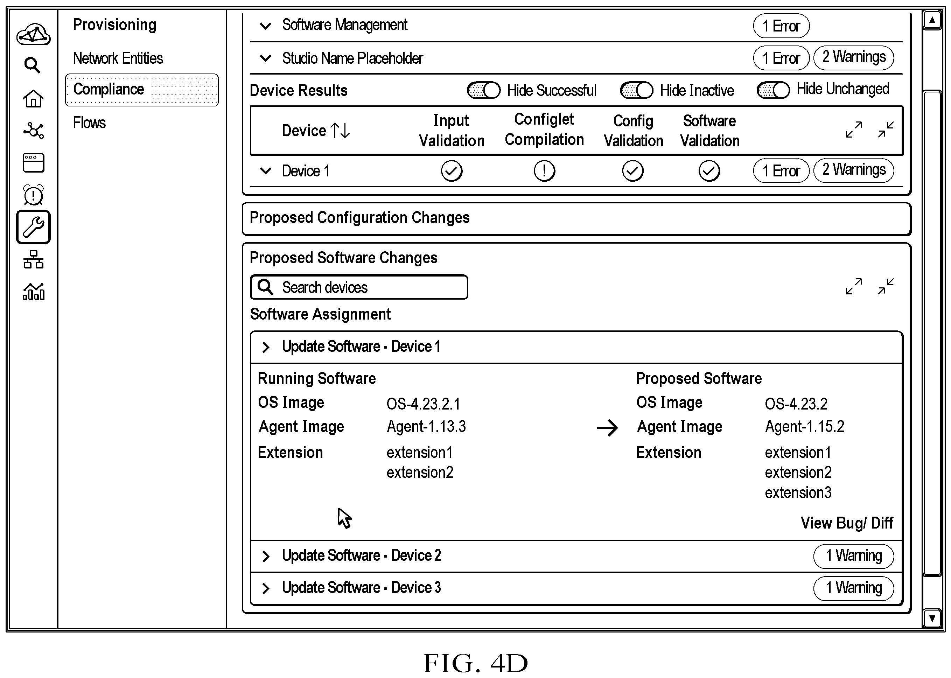

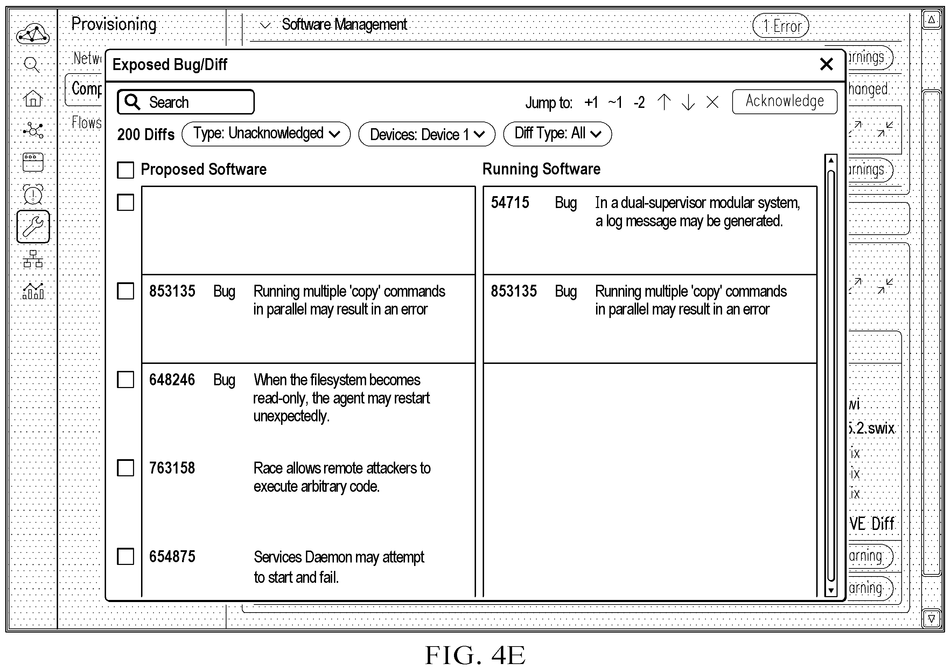

Similarly, looking at FIGURE 4C embodiment of an interface that may be utilized to identify one or more network devices that it may be desired to upgrade. Here, such an interface may identify network devices that it is recommended to upgrade when a user accesses a centralized network management system. The user may then select one or more identified network devices that it is recommended to upgrade (e.g., here "Device 1"). When the user selects an identified network device (e.g., "Device 1") the interface as depicted in FIGURE 4D may be presented, identifying a current "running version" of one or more pieces of software executing on the identified network device (here OS-4.23.2.1, Agent-1.13.3, extension1 and extension2) and "proposed software" for that device comprising other versions of one or more pieces of that software that is recommended for that network device (here OS-4.23.2, Agent-1.15.2, extension1, extension 2, and extension 3). When a user selects the "Exposed Bug Diff" link presented in the interface the user may be presented with the interface depicted in FIGURE 4E presenting the bugs that may manifest on that device under the "proposed software" recommended for that device along with the bugs on the currently "running software" (which may be resolved by upgrading to the "proposed software.").

It will be understood that while specific embodiments have been presented herein, these embodiments are merely illustrative, and not restrictive. Rather, the description is intended to describe illustrative embodiments, features, and functions in order to provide an understanding of the embodiments without limiting the disclosure to any particularly described embodiment, feature, or function, including any such embodiment, feature, or function described. While specific embodiments of, and examples for, the embodiments are described herein for illustrative purposes only, various equivalent modifications are possible within the spirit and scope of the invention, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments of the invention will be employed without a corresponding use of other features, and features described with respect to one embodiment may be combined with features of other embodiments without departing from the scope and spirit of the disclosure as set forth.

The disclosure in the application also includes the following numbered clauses:
1. A system, comprising:
   a processor;
   a defect database comprising defect entries for defects, wherein each defect entry comprises defect information including network device criteria;
   a network device database comprising network device entries for network devices in a network, wherein each network device entry comprises network device information including current network device information representing a current configuration of the network device as it is operating in the network; and
   a non-transitory computer readable medium, comprising instructions for:
      receiving an identification of a network device;
      receiving an identification of a proposed configuration change for that network device before the configuration change occurs on the network device in the network;
      accessing the network device database to obtain network device information corresponding to the network device from a network device entry for the network device;
      determining an applicable set of defects for that network device associated with the proposed configuration change based on the current configuration of the network device and the defect database by:
         generating proposed configuration change network device information based on the current network device information and the proposed configuration change, and
         accessing the defect database to compare the proposed configuration change network device information to the network device criteria associated with the set of defects in the defect database;
   determining a resolved set of defects resolved by the proposed configuration change by:
      comparing the current network device information to the network device criteria associated with the set of defects in the defect database to determine a current set of defects applicable to the current configuration of the network device, and
      determining the resolved set of defects based on the current set of defects applicable to the current configuration of the network device and the proposed configuration change; and
   presenting the resolved set of defects or the applicable set of defects for the proposed configuration change.
2. The system of clause 1, wherein the defect information includes a solution identifier, and the resolved set of defects is determined based on the solution identifier in each of the current set of defects applicable to the current configuration of the network device.
3. The system of clause 2, wherein the proposed configuration change specifies a proposed version of hardware in the network device or a proposed version of software executing on the network device.
4. The system of clause 1, wherein the network device information comprises state information of the network device obtained from the network device operating in the network, including enabled features of the network device.
5. The system of clause 4, wherein the network device criteria specifies state information required for the network device to be affected by the defect, including enabled features of the network device.
6. A method for determining whether a potential defect applies to a network device based on a proposed configuration change, comprising:
   receiving an identification of a network device in a network;
   receiving an identification of a proposed configuration change for that network device before the configuration change occurs on the network device;
   obtaining network device information corresponding to the network device wherein the current network device information represents a current configuration of the network device as it is operating in the network;
   obtaining a set of defects, where each defect is associated with network device criteria;
   determining an applicable set of defects for that network device associated with the proposed configuration change based on the current configuration of the network device and the set of defects by:
      generating proposed configuration change network device information based on the current network device information and the proposed configuration change; and
      comparing the proposed configuration change network device information to the network device criteria associated with the set of defects; and
   presenting the applicable set of defects for the proposed configuration change.
7. The method of clause 6, wherein each of the defects includes a solution identifier.
8. The method of clause 7, further comprising:
   determining a resolved set of defects resolved by the proposed configuration change by:
      comparing the current network device information to the network device criteria associated with the set of defects to determine a current set of defects applicable to the current configuration of the network device; and
      determining the resolved set of defects based on the solution identifier in each of the current set of defects and the proposed configuration change; and
   presenting the resolved set of defects for the proposed configuration change.
9. The method of clause 8, wherein the proposed configuration change specifies a proposed version of hardware in the network device or a proposed version of software executing on the network device.
10. The method of clause 9, wherein the solution identifier for each defect specifies aversion of hardware or software that resolves that defect.
11. The method of clause 8, wherein the network device information comprises state information of the network device, including enabled features of the network device.
12. The method of clause 11, wherein the network device criteria specifies state information required for the network device to be affected by the defect, including the enabled features of the network device.
13. The method of clause 12, wherein the network device information was obtained from the network device operating in the network.
14. The method of clause 13, wherein the network device information is obtained based on alteration of a system database maintaining configuration data for the network device at that network device.
15. A non-transitory computer readable medium, comprising instructions for:
   receiving an identification of a network device in a network;
   receiving an identification of a proposed configuration change for that network device before the configuration change occurs on the network device;
   obtaining network device information corresponding to the network device wherein the current network device information represents a current configuration of the network device as it is operating in the network;
   obtaining a set of defects, where each defect is associated with network device criteria;
   determining an applicable set of defects for that network device associated with the proposed configuration change based on the current configuration of the network device and the set of defects by:
      generating proposed configuration change network device information based on the current network device information and the proposed configuration change, and
      comparing the proposed configuration change network device information to the network device criteria associated with the set of defects;
   determining a resolved set of defects resolved by the proposed configuration change by:
      comparing the current network device information to the network device criteria associated with the set of defects to determine a current set of defects applicable to the current configuration of the network device, and
      determining the resolved set of defects based on the current set of defects and the proposed configuration change; and
   presenting the resolved set of defects or the applicable set of defects for the proposed configuration change.
16. The non-transitory computer readable medium of clause 15, wherein the resolved set of defects is determined based on a difference between the current set of defects applicable to the current configuration of the network device and the applicable set of defects for that network device associated with the proposed configuration change.
17. The non-transitory computer readable medium of clause 15, wherein each defect is associated with a solution identifier and the resolved set of defects is determined based on the solution identifier in each of the current set of defects applicable to the current configuration of the network device.
18. The non-transitory computer readable medium of clause 17, wherein the proposed configuration change specifies a proposed version of hardware in the network device or a proposed version of software executing on the network device.
19. The non-transitory computer readable medium of clause 18, wherein the solution identifier for each defect specifies a version of hardware or software that resolves that defect.
20. The non-transitory computer readable medium of clause 15, wherein the network device information comprises state information of the network device obtained from the network device operating in the network, including enabled features of the network device and the network device criteria specifies state information required for the network device to be affected by the defect, including enabled features of the network device.

## Claims

1. A system, comprising:
a processor;
a defect database comprising defect entries for defects, wherein each defect entry comprises defect information including network device criteria;
a network device database comprising network device entries for network devices in a network, wherein each network device entry comprises network device information including current network device information representing a current configuration of the network device as it is operating in the network; and
a non-transitory computer readable medium, comprising instructions for:
receiving an identification of a network device;
receiving an identification of a proposed configuration change for that network device before the configuration change occurs on the network device in the network;
accessing the network device database to obtain network device information corresponding to the network device from a network device entry for the network device;
determining an applicable set of defects for that network device associated with the proposed configuration change based on the current configuration of the network device and the defect database by:
generating proposed configuration change network device information based on the current network device information and the proposed configuration change, and
accessing the defect database to compare the proposed configuration change network device information to the network device criteria associated with the set of defects in the defect database;
determining a resolved set of defects resolved by the proposed configuration change by:
comparing the current network device information to the network device criteria associated with the set of defects in the defect database to determine a current set of defects applicable to the current configuration of the network device, and
determining the resolved set of defects based on the current set of defects applicable to the current configuration of the network device and the proposed configuration change; and
presenting the resolved set of defects or the applicable set of defects for the proposed configuration change.

2. The system of claim 1, wherein the defect information includes a solution identifier, and the resolved set of defects is determined based on the solution identifier in each of the current set of defects applicable to the current configuration of the network device.

3. The system of claim 1 or claim 2, wherein the proposed configuration change specifies a proposed version of hardware in the network device or a proposed version of software executing on the network device.

4. The system of any preceding claim, wherein the network device information comprises state information of the network device obtained from the network device operating in the network, including enabled features of the network device.

5. The system of any preceding claim, wherein the network device criteria specifies state information required for the network device to be affected by the defect, including enabled features of the network device.

6. A method for determining whether a potential defect applies to a network device based on a proposed configuration change, comprising:
receiving an identification of a network device in a network;
receiving an identification of a proposed configuration change for that network device before the configuration change occurs on the network device;
obtaining network device information corresponding to the network device wherein the current network device information represents a current configuration of the network device as it is operating in the network;
obtaining a set of defects, where each defect is associated with network device criteria;
determining an applicable set of defects for that network device associated with the proposed configuration change based on the current configuration of the network device and the set of defects by:
generating proposed configuration change network device information based on the current network device information and the proposed configuration change; and
comparing the proposed configuration change network device information to the network device criteria associated with the set of defects.

7. The method of claim 6, further comprising:
determining a resolved set of defects resolved by the proposed configuration change by:
comparing the current network device information to the network device criteria associated with the set of defects to determine a current set of defects applicable to the current configuration of the network device; and
determining the resolved set of defects based on the solution identifier in each of the current set of defects and the proposed configuration change; and
presenting the resolved set of defects or the applicable set of defects for the proposed configuration change.

8. The method of claim 7, wherein the resolved set of defects is determined based on a difference between the current set of defects applicable to the current configuration of the network device and the applicable set of defects for that network device associated with the proposed configuration change.

9. The method of claim 7 or claim 8, wherein each of the defects includes a solution identifier, and wherein the resolved set of defects is determined based on the solution identifier in each of the current set of defects applicable to the current configuration of the network device.

10. The method of any of claims 6 to 9, wherein the proposed configuration change specifies a proposed version of hardware in the network device or a proposed version of software executing on the network device.

11. The method of claim 10 when depending on claim 9, wherein the solution identifier for each defect specifies a version of hardware or software that resolves that defect.

12. The method of any of claims 6 to 11, wherein the network device information comprises state information of the network device, including enabled features of the network device.

13. The method of claim 12, wherein the network device criteria specifies state information required for the network device to be affected by the defect, including the enabled features of the network device.

14. The method of any of claims 6 to 13, wherein the network device information was obtained from the network device operating in the network, and preferably wherein the network device information is obtained based on alteration of a system database maintaining configuration data for the network device at that network device.

15. A computer readable medium comprising instructions which, when executed by one or more processors, cause the one or more processors to perform a method as set out in at least one of claims 6 to 14.
